# EUROPEAN PATENT SPECIFICATION

(11) **EP 4 441 148 B1**
(45) Date of publication and mention of the grant of the patent: **05.11.2025**
(21) Application number: 22812864.1
(22) Date of filing: 17.10.2022
(51) Int. Cl.: C08L 83/04, H01L 23/36

(54) **CONDUCTIVE SILICONE COMPOSITION CONTAINING CARBOXYLIC ACID-FUNCTIONAL POLYORGANOSILOXANE THIXOTROPIC AGENTS**
LEITFÄHIGE SILIKONZUSAMMENSETZUNG MIT THIXOTROPEN MITTELN AUF BASIS VON CARBONSÄUREFUNKTIONELLEN POLYORGANOSILOXANEN
COMPOSITION DE SILICONE CONDUCTRICE CONTENANT DES AGENTS THIXOTROPIQUES POLYORGANOSILOXANES À FONCTIONNALITÉ ACIDE CARBOXYLIQUE

(30) Priority: 02.12.2021 US 202163285363 P
(43) Date of publication of application: 09.10.2024
(73) Proprietor: Dow Silicones Corporation, Midland MI 48886-0994 (US)
(72) Inventor: LI, Zhanjie, Auburn, Michigan 48611 (US); MCDONALD, Kyle, Auburn, Michigan 48611 (US); BECERRA, Andrés, Auburn, Michigan 48611 (US); SOOTSMAN, Joseph, Auburn, Michigan 48611 (US); CHANG, Chi-Hao, Auburn, Michigan 48611 (US); HANSEN, Darren, Auburn, Michigan 48611 (US); ZHAO, Dan, Auburn, Michigan 48611 (US)
(74) Representative: Murgitroyd & Company
(86) International application number: PCT/US2022/046837
(87) International publication number: WO 2023/101767

(56) References cited:
- EP-A1- 0 081 119
- JP-A- S5 538 808
- US-A1- 2007 032 610

## Description

### Field of the Invention

The present invention relates to conductive silicone compositions that contain carboxylic acid-functional siloxane thixotropic agents.

### Introduction

Filled silicone compositions comprise a filler dispersed in a matrix material that comprises a polysiloxane component. Filled silicone compositions are used in many applications including as conductive silicone compositions such as thermally conductive materials and electrically conductive materials. The filler in conductive silicone compositions helps increase the conductive character of the composition. Thermally conductive silicone compositions typically contain thermally conductive fillers and electrically conductive silicone compositions typically contain electrically conductive fillers. The fillers are often present at concentrations of 15 volume-percent (vol%) or more and can be present at concentrations up to 80 vol% and even higher based on filled silicone composition volume. Increasing the amount of conductive filler can increase the conductive characteristics of the silicone composition, but it also typically increases the filled silicone composition's viscosity, which can cause the silicone composition to be difficult to apply to substrates (low workability). As a result, there has been tension between maximizing conductive properties of a silicone composition versus maintaining workability of the silicone composition. US 2007/032610 A1 discloses a composition that may include the product of an interaction between a first material having a low-temperature fluidity point including a first functional group; and a second material including a second functional group. The first functional group can interact with the second functional group below a threshold temperature to form a product having a viscosity greater than the viscosity of the first material or of the second material.

It is desirable to have high workability by having low viscosity under high shear, but it is also often desirable to have high viscosity under low or no shear to maintain the shape and location (that is, physical stability) where it is placed. Shear thinning compositions have a relatively high viscosity under little or no shear to provide composition stability while demonstrating relatively lower viscosity under shear to allow flow during application. As a result, shear thinning compositions can readily be applied by relatively high shear methods such as extrusion yet maintain physical stability once applied. There are ways to introduce shear thinning character to a filled silicone composition. However, the challenge is identifying how to induce shear thinning behavior in a filled silicone composition while still achieving a low enough viscosity under shear so as to allow for extrusion of the composition. Many methods for increasing shear thinning character often result in reduced extrusion/flow under shear. Shear thinning behavior is often characterized by a composition's "thixotropic index", which is a ratio of the viscosity at a low shear condition divided by the viscosity at a high shear condition. Increasing the thixotropic index corresponds to increasing the shear thinning character of a composition.

The thixotropic index can be increased by increasing the low shear viscosity, decreasing the high shear viscosity, or a combination of these. It can be desirable, however, to preferentially increase the low shear viscosity relative to decreasing high shear viscosity. Increasing low shear viscosity enhances physical stability and compositional stability (settling of the filler out from the composition) once applied or when in storage. When those features are of primary importance, such as in vertical applications where the composition should not drip or sag, it is desirable to increase low shear viscosity as much as possible. Changing high shear viscosity up or down can impact the method of deposition or extrusion of the composition in undesirable ways so it can be desirable to minimize the change in high shear viscosity.

An objective of the present invention is to identify an additive for filled silicone compositions that preferentially increases the low shear viscosity of a filled silicone composition relative to its high shear viscosity in order to increase the thixotropic index of the filled silicone composition. More specifically, an object of the present invention is to identify an additive for filled silicone compositions comprising 15 to 80 vol% filler, based on filled silicone composition volume, that increases the thixotropic index of the composition while preferentially increasing the Maximum Viscosity relative to Minimum Viscosity of the composition and while achieving a Minimum Viscosity of 200 Pascal*seconds (Pa*s) or less, preferably 100 Pa*s or less, as determined with a strain sweep method over a strain amplitude range of 0.01 percent (%) to 300% as described herein below. Even more desirable is if the additive can at the same time increase the thixotropic index of the filled silicone composition, preferably by 50% or more, preferably 75% or more, and most preferably 100% or more.

### BRIEF SUMMARY OF THE INVENTION

The present invention provides a solution to the challenge of identifying an additive for filled silicone compositions that preferentially increases the low shear viscosity of a silicone composition relative to its high shear viscosity in order to increase the thixotropic index of the composition. The additive of the present invention serves as a thixotropic agent for filled silicone compositions comprising 15 to 80 vol% filler that increases the thixotropic index of the filled silicone composition while preferentially increasing the Maximum Viscosity relative to Minimum Viscosity of the filled silicone composition and while achieving a Minimum Viscosity of 200 Pascal*seconds (Pa*s) or less, even 100 Pa*s or less, as determined with a strain sweep method over a strain amplitude range of 0.01 percent (%) to 300% as described herein below. The additive can at the same time increase the thixotropic index of the filled silicone composition even by 50% or more, preferably 75% or more, and most preferably 100% or more.

The present invention is a result of discovering carboxylic acid-functional linear polyorganosiloxanes having on average two or more carboxylic acid groups per molecule can act as a thixotropic agent in filled silicone compositions to achieve objectives set forth above.

In a first aspect, the present invention is a composition comprising filler particles dispersed in a matrix material, wherein the matrix material comprises: (a) 0.01 to 1.50 weight-percent of a first polyorganosiloxane, wherein first polyorganosiloxane is a linear polyorganosiloxane with an average of 2 or more carboxylic acid groups per molecule; and (b) 5 to 30 weight-percent of a second polyorganosiloxane that is free of carboxylic acid groups, wherein the second polyorganosiloxane is a liquid at 25 degrees Celsius and 101 megaPascals pressure; wherein the filler particles are present at a concentration in a range of 15 to less than 78 volume-percent based on composition volume and weight-percent values are relative to weight of the composition and wherein the composition is free of at least one of aliphatic diols and silicone polyethers

The composition of the present invention is useful as, for example, filled conductive polysiloxane compositions such as thermally conductive polysiloxane compositions and/or electrically conductive polysiloxane compositions.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated.

"Hydrocarbyl" refers to a univalent group formed by removing a hydrogen atom from a hydrocarbon and includes alkyl and aryl groups.

"Alkyl" refers to a hydrocarbon radical obtainable from an alkane by removal of a hydrogen atom. An alkyl can be linear or branched.

"Aryl" refers to a radical obtainable by removing a hydrogen atom from an aromatic hydrocarbon.

"Maximum Viscosity", "Minimum Viscosity", and "Thixotropic Index" for a composition are determined according to the following oscillatory shear strain amplitude sweep ("Strain Sweep") method. Provide a pair of 25 millimeter (mm) diameter round parallel serrated plates (for example, part number 401978.901 from TA Instruments, New Castle, DE, USA). Dispose a sample composition onto one of the plates and press the other plate against the sample composition until the plates are parallel to one another with a gap spacing between them of 1.0 mm with the sample composition in thermal contact with both plates and filling the gap spacing between the plates. Using an ARES-G2 strain-controlled rheometer (TA Instruments, New Castle, DE, USA), conduct a logarithmic sweep of strain amplitude from 0.01 percent (%) to 300% on the sample composition with 20 sampling points per decade using an angular frequency of 10 radians per second at 23 degrees Celsius (°C). Record Complex Viscosity in Pascal*seconds (Pa*s) as a function of Percent Oscillation Strain Amplitude. The "Maximum Viscosity" is the highest Complex Viscosity recorded above an oscillation torque amplitude of 0.1 microNewton*meter (or, equivalently, above an oscillation stress amplitude threshold of 0.0326 Pascals). The "Minimum Viscosity" is the lowest Complex Viscosity recorded above the same threshold.

"Thixotropic Index" is the ratio of the Maximum Viscosity to the Minimum Viscosity. The compositions of the present invention are able to achieve a Thixotropic Index of 5 or more, even 10 or more, 20 or more, 30 or more, 40 or more, 50 or more, 60 or more, 70 or more, 80 or more, 90 or more, 100 or more, even 150 or more, 200 or more, 250 or more, even 300 or more while at the same time achieving a Minimum Viscosity of 100 Pa*s or less, even 75 Pa*s or less, 50 Pa*s or less, 25 Pa*s or less or even 10 Pa*s or less.

Determine the composition and average number of siloxane units in a polysiloxane using ²⁹Si, ¹³C, and ¹H nuclear magnetic resonance spectroscopy (see, e.g., The Analytical Chemistry of Silicones, Smith, A. Lee, ed., John Wiley & Sons: New York, 1991, p. 347ff.).

The composition of the present invention comprises filler particles dispersed (distributed) in a matrix material. The matrix material comprises a first polyorganosiloxane and a second polyorganosiloxane.

The first polyorganosiloxane comprises an average of 2 or more carboxylic acid groups per molecule. In the broadest scope, the first polyorganosiloxane can be of any structure or shape including linear, branched, cyclic, or a combination of linear and cyclic for what is known as "dumb-bell" structures. Dumb-bell structures can have the following chemical structure: 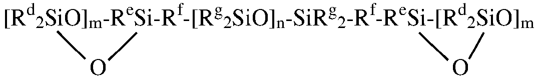 where: R^{d} is independently in each occurrence selected from a group of hydrocarbyls and carboxylic acid functionalized hydrocarbyls having from one to 12 carbon atoms; R^{e} and R^{g} are independently in each occurrence selected from hydrocarbyls having from one to 8 carbon atoms; R^{f} is independently in each occurrence selected from oxygen and divalent hydrocarbons having from one to 12 carbon atoms; subscript m is independently in each occurrence a value in a range of 2 to 4; and subscript n is independently in each occurrence a value in a range of 5 to 150; provided that there are at least to carboxylic acid groups per molecule.

Desirably, the first polyorganosiloxane is a linear polyorganosiloxane. Carboxylic acid groups can be terminal or pendant (pendant means located along the polymer chain other than at the end of the chain) or a combination of terminal and pendant. Linear polyorganosiloxanes comprise primarily, and can be consist exclusively, of siloxane units selected from R"₃SiO_{1/2} ("M") and R"₂SiO_{2/2} ("D") siloxane units, where R" is a monovalent organic or substituted organic group attached to the silicon atom and the O_{1/2} and O_{2/2} of each siloxane unit refer to oxygen atoms shared with another silicon atom of another siloxane unit. Linear polyorganosiloxanes can contain 2 or fewer, preferably one or fewer R"SiO_{3/2} ("T") and SiO_{4/2} ("Q") siloxane units. Desirably, the first polyorganosiloxane has one or more than one carboxylic acid group on each end of a linear polyorganosiloxane as terminal carboxylic acid group(s).

The first polyorganosiloxane can have chemical structure (I):

HOOC-R'-R₂SiO-[R₂SiO]ₙ-SiR₂-R'-COOH (I)

where:
R' is independently in each occurrence selected from a group of divalent hydrocarbons having one or more, and can have 2 or more, 3 or more, 4 or more, 5 or more, 6 or more, 7 or more, 8 or more, even 9 or more carbon atoms while at the same time typically has 12 or fewer, and can have 10 or fewer, 9 or fewer, 8 or fewer, 6 or fewer, 5 or fewer, 4 or fewer, 3 or fewer, even 2 or fewer carbon atoms. For example, R' can be - [CH₂]₉- in one or all occurrences.
R is independently in each occurrence selected from a group of hydrocarbyls having one or more, 2 or more, 3 or more, 4 or more, 5 or more, 6 or more, even 7 or more carbon atoms and at the same time typically has 8 or fewer, and can have 7 or fewer, 6 or fewer, 5 or fewer, 4 or fewer, 3 or fewer, even 2 or fewer carbon atoms. For example R can be selected from methyl and phenyl groups.

Subscript n is the average number of [R₂SiO] groups in the first polyorganosiloxane and has a value of 5 or more, and can have a value of 10 or more, 20 or more, 30 or more, 40 or more, 50 or more, 60 or more 70 or more 80 or more 90 or more even 100 or more while at the same time typically has a value of 150 or less, 140 or less, 130 or less, 120 or less, 110 or less, even 100 or less.

The concentration of first polyorganosiloxane in the composition is desirably 0.01 weight-percent (wt%) or more, and can contain 0.02 wt% or more 0.04 wt% or more, 0.06 wt% or more, 0.08 wt% or more, 0.10 wt% or more, 0.25 wt% or more, 0.5 0 wt% or more, 0.75 wt% or more, 1.00 wt% or more, 1.25 wt% or more while at the same time is typically 1.50 wt% or less, and can be 1.40 wt% or less, 1.30 wt% or less, 1.20 wt% or less, 1.10 wt% or less 1.00 wt% or less, 0.8 wt% or less, 0.60 wt% or less, 0.40 wt% or less, 0.20 wt% or less, 0.10 wt% or less, even 0.08 wt% or less relative to the weight of the composition.

The matrix material further comprises a second polyorganosiloxane that is free of carboxylic acid groups. The second polyorganosiloxane is a liquid at 25 degrees Celsius (°C) and 1010 megaPascals (MPa) pressure. "Liquid" means the material conforms to the shape of its container.

The second polyorganosiloxane can be a linear polyorganosiloxane. For example, the second polyorganosiloxane can have an average chemical structure (II):

R^{a}R"₂SiO-[R₂SiO]ₘ-OR"₂R^{a} (II)

where:
R" and R^{a} are independently in each occurrence selected from hydrocarbyl groups, preferably having one or more and at the same time 8 or fewer, 6 or fewer, 4 or fewer, even 3 or fewer or 2 or fewer carbon atoms. R" can be an alkyl group while R^{a} is an alkenyl group such as a vinyl group. For example, each R^{a} can be a vinyl group and each R" can be selected from methyl or phenyl groups.

Subscript "m" is the average number of R₂SiO units per molecule and generally is a value of 40 or more, and can be 50 or more, 60 or more, even 70 or more, 80 or more, 100 or more, 125 or more, 150 or more, 175 or more, even 200 or more while at the same time is typically 800 or less, and can be 600 or less, 400 or less, 200 or less, 150 or less, 100 or less, 80 or less, 60 or less, even 50 or less or 45 or less.

The second polyorganosiloxane is typically present at a concentration of 5 wt% or more, preferably 6 wt% or more, and can be 8 wt% or more, 10 wt% or more, 12 wt% or more, 14 wt% or more, 16 wt% or more, 18 wt% or more, 20 wt% or more, 22 wt% or more, 24 t% or more, 26 wt% or more, even 28 wt% or more while at the same time is typically 30 wt% or less, and can be 29 wt% or less, 27 wt% or less, 25 wt% or less, 23 wt% or less, 21 wt% or less, 19 wt% or less, 17 wt% or less, 15 wt% or less, 13 wt% or less 9 wt% or less, even 7 wt% or less with wt% relative to composition weight.

The matrix material can comprise a third polyorganosiloxane different from the first and second polyorganosiloxanes. The third polyorganosiloxane can comprise two or more silyl hydride groups. For example, the matrix material can be a hydrosilylation curable composition comprising the first polyorganosiloxane, a second polyorganosiloxane having vinyl functionality (for example, chemical structure (II) where each R^{a} is vinyl) and a third polyorganosiloxane that has multiple silyl hydride (SiH) groups.

The composition further comprises filler particles dispersed in the matrix material. The filler particles are present at a concentration of 15 volume-percent (vol%) or more, 20 vol% or more, 25 vol% or more, 30 vol% or more, 35 vol% or more, 40 vol% or more, 45 vol% or more, 50 vol% or more, 55 vol% or more, 60 vol% or more, 65 vol% or more, 70 vol% or more, even 75 vol% or more while at the same time are generally present at a concentration of 78 vol% or less, or 75 vol% or less, 74 vol% or less, 70 vol% or less, 65 vol% or less, 60 vol% or less, 55 vol% or less, 50 vol% or less, 45 vol% or less, 40 vol% or less, 35 vol% or less, even 30 vol% or less based on composition volume.

The filler particles can be thermally conductive fillers, electrically conductive fillers, non-conductive fillers, or any combination of these types of fillers. Desirably, the fillers particles are any one or any combination of more than one filler selected from thermally conductive fillers and electrically conductive fillers.

Thermally conductive fillers include metal particles such as particles of aluminum, silver, and copper; metal coated particles including particles of any type coated with a metal such as aluminum, silver, and copper; inorganic particles such as particles of boron nitride, aluminum oxide, zinc oxide, magnesium oxide, aluminum nitride, and aluminum trihydrate; as well as carbonaceous material such as carbon nanotubes, graphene, and carbon fibers.

Electrically conductive fillers include metal particles such as particles of silver, gold, platinum, palladium, nickel, copper, and alloys thereof; particles of any kind coated with a metal such as silver, gold, platinum, palladium, nickel, copper, and alloys thereof; as well as carbon black, carbon fibers, carbon nanotubes, and graphene.

The filler particles typically have an average particle size of 0.05 micrometers (µm) or more, 0.1 µm or more, 0.2 µm or more, 0.5 µm or more, 1.0 µm or more, 2.0 µm or more, 3.0 µm or more, 5.0 µm or more, 10 µm or more, 20 µm or more, 30 µm or more, 40 µm or more, 50 µm or more and can be 60 µm or more, 70 µm or more, 80 µm or more, 90 µm or more, even 100 µm or more while at the same time typically have an average particle size of 250 µm or less, 200 µm or less, 150 or less, 100 µm or less, 90 µm or less, 80 µm or less, 70 µm or less, 60 µm or less, 50 µm or less, 40 µm or less, 30 µm or less, 20 µm or less, 10 µm or less, 5.0 µm or less, even 3.0 µm or less, 1.0 µm or less. Determine average particle size as the volume-weighted median value of particle diameter distribution (Dv50) of the polyorganosiloxane using a Mastersizer^{™} 3000 laser diffraction particle size analyzer from Malvern Instruments.

In the broadest scope, the filler particles can be of any shape including any one or any combination of more than one of the following shapes: spherical, polyhedral, platelet, rod-like, or irregularly shaped (for example, "crushed").

The composition can, and typically does, comprise a combination of different types and/or sizes of filler particles. For instance, the composition can comprise a collection to two or more, even three or more different filler particles that differ in composition and/or shape and/or size.

The compositions of the present invention can further comprise or be free of a filler treating agent as part of the matrix material. Filler treating agents are desirable to improve dispersion of the filler into the matrix material, typically by reducing filler agglomeration and filler-filler interactions. Filler treating agents can also improve wet-out of the filler surfaces by matrix material, reduce viscosity of the composition and cap reactive groups on filler surfaces to prevent reactions with the filler that may reduce shelf life of the composition. Desirably, the treating agent is a trialkoxy functional silicone and/or silane. The treating agent can comprise, or consists of, one or both of an alkyltrialkoxysilane and monotrialkoxysiloxy-terminated diorganopolysiloxane.

Examples of suitable alkyltrialkoxysilanes have the general formula: (R¹)(R²O)₃Si; where R¹ is an alkyl desirably having one or more, and can have 2 or more, 3 or more, 4 or more, 5 or more, 6 or more, 7 or more, 8 or more, 9 or more, 10 or more, 11 or more, 12 or more, 13 or more, 14 or more, 15 or more, even 16 or more carbon atoms while at the same time typically has 18 or fewer and can have 17 or fewer, 16 or fewer, 15 or fewer, 14 or fewer, 13 or fewer, 12 or fewer, 11 or fewer or even 10 or fewer carbon atoms on average per molecule; and R² is desirably an alkyl having one or more, 2 or more, 3 or more, 4 or more, 5 or more, even 6 or more while at the same time typically contains 10 or fewer, 9 or fewer, 8 or fewer, 7 or fewer, 6 or fewer, 5 or fewer, 4 or fewer, 3 or fewer, even 2 or fewer carbon atoms. Desirably, the alkyltrialkoxysilane is an alkyltrimethoxy silane with the alkyl group as described above. Examples of suitable alkyl trialkoxy silanes are n-decyltrimethoxy silane and methyltrimethoxysilane. The concentration of alkyltrialkoxysilane in the composition is generally zero wt% or more, 0.05 wt% or more, 0.10 wt% or more, 0.20 wt% or more, 0.22 wt% or more, 0.24 wt% or more while at the same time is generally 0.75 wt% or less, 0.50 wt% or less, 0.40 wt% or less, 0.30 wt% or less, preferably 0.28 wt% or less, 0.26 wt% or less 0.24 wt% or less and can be 0.22 wt% or less based on the composition weight.

Examples of suitable monotrialkoxysiloxy-terminated diorganopolysiloxanes generally have the following chemical structure (III):

R₃SiO-(R₂SiO)ₕ-[(CH₂)ₑ((CH₃)₂SiO)_{f}]_{g}-(CH₂)ₑ-Si(OR²)₃ (III)

where: R and R² are each independently in each occurrence as defined above; subscript h is the average number of (R₂SiO) units per molecule and typically has a value of 10 or more, 15 or more, 20 or more, 25 or more, even 30 or more while at the same time is generally 150 or less, 140 or less, 130 or less, 120 or less, 110 or less, 100 or less, 90 or less, 80 or less, 70 or less, 60 or less, 50 or less, 45 or less, 40 or less, 35 or less or even 30 or less; subscript e is the average number of CH₂ units in each linkage and has a value independently in each occurrence of zero or more, one or more, even two or more and at the same time is usually 4 or less, 3 or less or even 2 or less; subscript f typically has a value of zero or more, one or more, 2 or more, 3 or more and at the same time is generally 6 or less, 5 or less, 4 or less, 3 or less, or even 2 or less; and subscript g typically has a value of zero or more, one or more, 2 or more, 3 or more, even 4 or more while at the same time generally has a value of 6 or less, even 5 or less, 4 or less, or 3 or less.

Desirably, the monotrialkoxysiloxy-terminated diorganopolysiloxane has the general molecular structure (IV):

(CH₃)₃SiO-((CH₃)₂SiO)ₜ-Si(OR²)₃ (IV)

One particularly desirable trialkoxysiloxy-terminated diorganopolysiloxane has the composition of Formula (IV) with R² equal to a methyl and subscript t equal to a value of 130 or less, preferably 120 or less, preferably 110 or less, more preferably 110 or less 100 or less, 90 or less, 80 or less, 70 or less, 60 or less, 50 or less, 40 or less, or 30 or less while at the same time 20 more, preferably 30 or more so as to form a terminal trimethoxy functionalized silicon atom.

The concentration of monotrialkoxysiloxy-terminated diorganosiloxane is typically zero wt% or more, 0.10 wt% or more, 0.20 wt% or more, 0.30 wt% or more, 0.40 wt% or more, 0.50 wt% or more, 0.75 wt% or more, even 1.0 wt% or more or 2.0 wt% or more, while at the same time is generally 3.0 wt% or less, 2.0 wt% or less, 1.20 wt% or less, 1.15 wt% or less, or even 1.10 wt% or less based on composition weight.

The composition can further comprise (or be free of) any one or any combination of more than one additional component. Examples of such additional components include cure inhibitors, cure catalysts, crosslinkers, antioxidant stabilizers, pigments, viscosity modifiers, silica filler, and spacer additives. For avoidance of doubt, the composition can be free of any one or any combination or more than one of the additional components. For example, the composition can be free of silica filler. "Silica filler" refers to solid particulates that comprise silica including natural silica (such as crystalline quartz, ground quartz, and diatomaceous silica), and synthetic silica (such as fumed silica, fused silica, silica gel and precipitated silica). Additionally, or alternatively, the composition of the present invention can be free of polyether and/or silanol functional polydimethylsiloxane.

Examples of cure inhibitors include 1,3,5,7-tetravinyl-1,3,5,7-tetramethylcylcotetrasiloxane, 1-ethynyl-1-cyclohexanol, 2phenyl-3-butyn-2-ol, 2-methyl-3-butyn-2-ol, fumarates, maleates, and methyl(tris(1,1-dimethyl-2-propynyloxy))silane. When present, inhibitors are typically present at a concentration of 0.0001 wt% or more 0.001 wt% or more and at the same time is generally present at a concentration of 5 wt% or less, or even one wt% or less, even 0.5 wt% or less based on composition weight.

Cure catalysts can include, for example, hydrosilylation cure catalysts such as platinum based catalyst such as Karstedt's catalyst and/or Speier's catalyst (H₂PtCl₆).

Crosslinkers include siloxanes having two or more silyl hydride (SiH) functionalities on average per molecule, and include the third polyorganosiloxane mentioned herein above.

Antioxidant, if present, can be included typically at a concentration of 0.001 to one wt% of the composition weight. Antioxidants can be present alone or in combination with stabilizers. Antioxidants include phenolic antioxidants and stabilizers include organophosphorous derivatives.

Examples of pigments include carbon black, graphite, titanium dioxide, and copper phthalocyanine. When present, pigment tends to be present at a concentration of 0.0001 to one wt% based on composition weight.

Spacer additives are non-thermally conductive fillers and have average particle sizes in the range of 50-250 micrometers. Examples of spacers include glass and polymer beads.

The composition can be free of any one or any combination of more than one of: hydroxyl functional polysiloxanes, particularly terminal silanol (Si-OH) functional polysiloxanes; hydroxyl functional hydrocarbons such as aliphatic diols; and silicone polyethers.

### Thermally Conductive Compositions

The composition of the present invention can be a thermally conductive composition. As a thermally conductive composition, the filler particles comprise thermally conductive filler particles and desirably at a concentration of 40 vol% or more, and can be 50 vol% or more, 60 vol% or more even 70 vol% or more and at the same time generally are present at a concentration of less than 78 vol%, preferably 74 vol% or less and can be 70 vol% or less, 60 vol% or less, or even 50 vol% or less based on composition volume.

When the thermally conductive filler is present at a concentration in a range of 40 to 70 vol% based on composition volume, then the first polyorganosiloxane is desirably present at a concentration of 0.01 wt% or more, and can be 0.05 wt% or more, 0.10 wt% or more, 0.15 wt% or more, 0.20 wt% or more, 0.40 wt% or more, 0.60 wt% or more, 0.80 wt% or more, 1.00 wt% or more, 1.2 wt% or more, even 1.4 wt% or more while at the same time is typically 1.5 wt% or less, 1.3 wt% or less, 1.1 wt% or less, 1.0 wt% or less, 0.8 wt% or less, 0.6 wt% or less, 0.4 wt% or less, 0.2 wt% or less, or even 0.1 wt% or less based on composition weight.

When the thermally conductive filler is present at a concentration in a range of more than 70 up to less than 78 vol%, typically 70 to 74 vol%, based on composition volume, then the first polyorganosiloxane is desirably present at a concentration of 0.01 wt % or more, and can be 0.05 wt% or more, 0.10 wt% or more, 0.15 wt% or more, 0.20 wt% or more, 0.25 wt% or more, 0.30 wt% or more, even 0.40 wt% or more while at the same time is typically 0.5 wt% or less, 0.4 wt% or less, 0.3 wt% or less, 0.2 wt% or less, 0.1 wt% or less, even 0.075 wt% or less based on composition weight.

The thermally conductive composition desirably comprises a filler treating agent as described previously.

One desirable second polyorganosiloxane for use in thermally conductive compositions of the present invention is a polydimethylsiloxane with terminal vinyl functionality and an average degree of polymerization in a range of 40 to 800 (that is, chemical structure (II) where each R is methyl, each R^{a} is vinyl and m is in a range of 40 to 800).

### Electrically Conductive Compositions

The composition of the present invention can be an electrically conductive composition. As an electrically conductive composition, the filler particles comprise electrically conductive filler particles and desirably at a concentration of 5 vol% or more and can be 10 vol% or more, 15 vol% or more, 20 vol% or more, even 25 vol% or more and at the same time are typically present at a concentration of 55 vol% or less, even 50 vol% or less, 45 vol% or less, 40 vol% or less, 35 vol% or less, 30 vol% or less, 25 vol% or less, 20 vol% or less, 15 vol% or less, 10 vol% or less, even 8 vol% or less based on composition volume.

When the composition is an electrically conductive composition, the first polyorganosiloxane is desirably present at a concentration of 0.1 wt% or more, 0.2 wt% or more, 0.3 wt% or more, 0.4 wt% or more, 0.5 wt% or more, 0.6 wt% or more, 0.7 wt% or more, 0.8 wt% or more, 0.9 wt% or more, 1.0 wt% or more, 1.1 wt% or more, 1.2 wt% or more, 1.3 wt% or more, even 1.4 wt% or more while at the same time is typically present at a concentration 1.5 wt% or less, 1.4 wt% or less, 1.3 wt% or less, 1.2 wt% or less, 1.1 wt% or less, 1.0 wt% or less, 0.9 wt% or less, 0.8 wt% or less, 0.7 wt% or less, 0.6 wt% or less, or even 0.5 wt% or less based on composition weight. It is also desirable for the second polyorganosiloxane to be a polydimethylsiloxane with terminal vinyl functionality and an average degree of polymerization in a range of 140 to 800 (that is, chemical structure (II) where each R is methyl, each R^{a} is vinyl and m is in a range of 140 to 800).

The electrically conductive composition desirably further includes a silyl hydride functional polydimethylsiloxane crosslinker and a platinum-based hydrosilylation catalyst. Examples of suitable platinum-based hydrosilylation catalysts include any one or any combination of more than one selected from a group consisting of platinum (0)-1,3-divinyl-1,1,3,3-tetramethyldisiloxane (Karstedt's catalyst), H₂PtCl₆, di-µ.-carbonyl di-.π.-cyclopentadienyldinickel, platinum-carbonyl complexes, platinum-divinyltetramethyldisiloxane complexes, platinum cyclovinylmethylsiloxane complexes, platinum acetylacetonate (acac), platinum black, platinum compounds such as chloroplatinic acid, chloroplatinic acid hexahydrate, a reaction product of chloroplatinic acid and a monohydric alcohol, platinum bis(ethylacetoacetate), platinum bis(acetylacetonate), platinum dichloride, and complexes of the platinum compounds with olefins or low molecular weight organopolysiloxanes or platinum compounds microencapsulated in a matrix or core-shell type structure. The hydrosilylation catalyst can be part of a solution that includes complexes of platinum with low molecular weight organopolysiloxanes that include 1,3-diethenyl-1,1,3,3-tetramethyldisiloxane complexes with platinum. These complexes may be microencapsulated in a resin matrix. The catalyst can be 1,3-diethenyl-1,1,3,3-tetramethyldisiloxane complex with platinum.

### Examples

Table 1 identifies materials for use in preparing samples described herein.

**Table 1**

| **Component** | **Description** | **Source** |
|---|---|---|
| First Polyorganosiloxane 1 | carboxydecyl-terminated polydimethylsiloxane having Structure (I) where R' is -(CH₂)₉-, each R is methyl and average n is 8, with a viscosity of 15-30 square millimeters per second (mm²/s) at 25 °C. | Available as DMS-B12 from Gelest. |
| First Polyorganosiloxane 2 | carboxydecyl -terminated polydimethylsiloxane having Structure (I) where R' is -(CH₂)₉-, each R is methyl and average n is 130, with a viscosity of 450-550 square millimeters per second (mm²/s) at 25 °C. | Available as DMS-B25 from Gelest. |
| Second Polyorganosiloxane 1 | Vinyl dimethyl terminated polydimethylsiloxane having chemical structure (II) where each R^{a} is vinyl, each R is methyl and m is 41. | Prepare according to teachings in US4329273. |
| Second Polyorganosiloxane 2 | Vinyl dimethyl terminated polydimethylsiloxane having chemical structure (II) where each R^{a} is vinyl, each R is methyl and m is 179, and a zero shear viscosity of 430 mPa*s at 25 °C, and vinyl wt% of 0.44. | Available as DOWSIL^{™} SFD-119 polymer from The Dow Chemical Company. |
| Second Polyorganosiloxane 3 | Vinyl dimethyl terminated polydimethylsiloxane having chemical structure (II) where each R^{a} is vinyl, each R is methyl and m is 800, viscosity of 44,000 mPa*s and 0.088 wt% vinyl. | Prepare according to teachings in US4329273. |
| Second Polyorganosiloxane 4 | Vinyl dimethyl terminated polydimethylsiloxane having chemical structure (II) where each R^{a} is vinyl, each R is methyl and m is 48. | Prepared according to teachings in US4329273. |
| Second Polyorganosiloxane 5 | Vinyl dimethyl terminated polydimethylsiloxane having chemical structure (II) where each R^{a} is vinyl, each R is methyl and m is 149. | Prepared according to teachings in US4329273. |
| Filler 1 | Aluminum trihydrate particles having an average particle size of 45 µm. | Available as MX-200 from RJ Marshall company. |
| Filler 2 | Crushed alumina particles having an average particle size of 3 µm. | Available as A-CF-3 from Chalco company. |
| Filler 3 | Zinc oxide particles having an average particle size of 0.12 µm. | Available as ZOCO102 from Zochem company. |
| Filler 4 | Spherical alumina particles having an average particle size of 40 µm. | Available as DAM-40K from Denka company. |
| Filler 5 | Zinc oxide particles having an average particle size of 0.2 µm. | Available as ZOCO104 from Zochem company. |
| Filler 6 | Alumina filler having an average particle size of 1-2 micrometers | Available as AL-43-BE from Showa Denko K.K. |
| Filler 7 | Alumina filler having an average particle size of 20 micrometers | Available as CB-A20S from Showa Denko K.K. |
| Filler 8 | Silver flake having an average particle size of 3.94 µm. | Available as RA-0127 from Metalor Technologies. |
| Filler Treating Agent 1 | n-decyltrimethoxysiloxane | Available as SID2670.0 from Gelest. |
| Filler Treating Agent 2 | (CH₃)₃Si[(CH₃)₂SiO]₁₁Si(OCH₃)₃ | Prepare according to teaching in US2006/01300336. |
| Filler Treating Agent 3 | Methyltrimethoxysilane | Available from Gelest |
| Si-H Polysiloxane | Trimethyl terminated dimethyl-cohydrogen methyl polysiloxane with 0.83 wt% SiH. | Available as DOWSIL^{™} 6-3570 Polymer from The Dow Chemical Company. |
| Platinum Catalyst 1 | 1,3-diethenyl-1,1,3,3 tetramethyldisiloxane platinum complex. | Available as SYL-OFF^{™} 4000 Catalyst from The Dow Chemical Company. |
| Inhibitor 1 | 1,3,5,7-tetravinyl-1,3,5,7-tetramethylcyclotetrasiloxane | Available as SIT7900.0 from Gelest. |

DOWSIL is a trademark of The Dow Chemical Company. SYL-OFF is a trademark of Dow Corning Corporation.

### Thermally Conductive Composition Samples - Part I

### Base Thermally Conductive Composition

Prepare samples by first preparing a base thermally conductive composition (TC) and then mixing the conductive composition with a First Polyorganosiloxane component. Prepare five base thermally conductive compositions (TC-1 through TC-5) according to the formulations in Table 2 and the following procedure: add the Second Polyorganosiloxane 1, Filler Treating Agents and Filler 3 to a 100 milliliter (mL) polypropylene cup and place the cup in a Flacktek Speedmixer and mix at 2000 revolutions per minute (RPM) for 20 seconds. Then add Filler 2 and mix again at 2000 RPM for 30 seconds, followed by adding Filler 1 and mixing at 2000 RPM for 30 seconds. Transfer the resulting mixture to an aluminum pan and heat to 150 degrees Celsius (°C) under vacuum at 3.066 MegaPascal (23 Torr) pressure for one hour.

**Table 2**

| **Formulation** | **Second Polyorganosiloxane 1 (grams)** | **Filler Treating Agent 1 (grams)** | **Filler Treating Agent 2 (grams)** | **Filler 1 (g)** | **Filler 2 (g)** | **Filler 3 (g)** | **WT%2*** | **Final Filler Loading (vol %)** |
|---|---|---|---|---|---|---|---|---|
| TC-1 | 6.27 | 0.50 | 1.20 | 45.89 | 26.50 | 19.64 | 7.97 | 78 |
| TC-2 | 8.04 | 0.50 | 1.20 | 45.00 | 26.00 | 19.26 | 9.74 | 74 |
| TC-3 | 9.94 | 0.50 | 1.20 | 44.06 | 25.45 | 18.85 | 11.64 | 70 |
| TC-4 | 15.30 | 0.50 | 1.20 | 41.39 | 23.90 | 17.71 | 17.0 | 60 |
| TC-5 | 29.85 | 0.50 | 1.20 | 34.13 | 19.71 | 14.61 | 31.55 | 40 |

| | | | | | | | | |
|---|---|---|---|---|---|---|---|---|
| * WT%2 is the weight-percent of matrix material in the composition. | | | | | | | | |

### Thermally Conductive Compositions

Prepare thermally conductive composition samples using the base thermally conductive compositions from Table 2 by adding the amount of First (1^{st}) Polyorganosiloxane as specified in Table 3.

For samples containing 0.1, 0.5, and 1.5 wt% 1^{st} Polyorganosiloxane, prepare the thermally conductive composition samples in a 40 milliliter (mL) polypropylene cup by adding 20 grams (g) of base thermally conductive composition and the specified amount of 1^{st} Polyorganosiloxane. Use 0.02 g of 1^{st} polyorganosiloxane for every 0.1 wt% specified in Table 2 (for example, 0.02 g for 0.1 wt% and 0.10 g for 0.5 wt% and 0.30 g for 1.5 wt%)

For samples containing 0.01 and 0.05 wt% 1^{st} Polyorganosiloxane, prepare the thermally conductive composition samples in a 100 mL polypropylene cup by adding 100 g of base thermally conductive composition and 0.01 g (for 0.01 wt%) or 0.05 g (for 0.05 wt%) of 1^{st} Polyorganosiloxane.

Mix the samples using a Flacktek speed mixer and mix at 1500 revolutions per minute (RPM) for 20 seconds to obtain the sample thermally conductive composition.

Formulations for the thermally conductive composition samples are in Table 3 along with characteristics of the thermally conductive compositions. Table 3 is grouped by vol% filler in the composition. Characterize Maximum Viscosity, Minimum Viscosity and Thixotropic Index using the Strain Sweep method as described herein above.

**Table 3**

| **Sample** | **TC used** | **Vol% Filler** | **1^{st} Polyorganosiloxane** | | **Maximum Viscosity** (*Pa*s)* | **Minimum Viscosity** *(Pa*s)* | **Thixotropic Index** | **Comments** |
|---|---|---|---|---|---|---|---|---|
| | | | Which one | wt% | | | | |
| Ref 1 | TC-1 | 78 | (none) | N/A | 1174 | 43 | 27 | Reference |
| A | TC-1 | 78 | 2 | 0.1 | 35954 | 236 | 177 | Fail² |
| Ref 2 | TC-2 | 74 | (none) | N/A | 449 | 19 | 24 | Reference |
| 1 | TC-2 | 74 | 1 | 0.01 | 1414 | 24 | 58 | Pass¹ |
| 2 | TC-2 | 74 | 1 | 0.1 | 5602 | 37 | 150 | Pass¹ |
| 3 | TC-2 | 74 | 1 | 0.5 | 20301 | 62 | 326 | Pass¹ |
| 4 | TC-2 | 74 | 2 | 0.01 | 1110 | 33 | 34 | Pass¹ |
| 5 | TC-2 | 74 | 2 | 0.1 | 5777 | 60 | 96 | Pass¹ |
| 6 | TC-2 | 74 | 2 | 0.5 | 14472 | 81 | 178 | Pass¹ |
| Ref 3 | TC-3 | 70 | (none) | N/A | 461 | 14 | 33 | Reference |
| 7 | TC-3 | 70 | 1 | 0.01 | 766 | 16 | 48 | Pass¹ |
| 8 | TC-3 | 70 | 1 | 0.05 | 570 | 12 | 48 | Pass¹ |
| 9 | TC-3 | 70 | 1 | 0.1 | 4237 | 28 | 151 | Pass¹ |
| 10 | TC-3 | 70 | 1 | 0.5 | 7535 | 34 | 222 | Pass¹ |
| 11 | TC-3 | 70 | 1 | 0.05 | 1139 | 25 | 46 | Pass¹ |
| 12 | TC-3 | 70 | 2 | 0.1 | 2488 | 31 | 80 | Pass¹ |
| 13 | TC-3 | 70 | 2 | 0.5 | 14329 | 66 | 217 | Pass¹ |
| B | TC-3 | 70 | 2 | 1.5 | -- | -- | -- | Fail³ |
| Ref 4 | TC-4 | 60 | (none) | N/A | 126 | 4.5 | 28 | Reference |
| 14 | TC-4 | 60 | 1 | 0.05 | 221 | 3.8 | 58 | Pass¹ |
| 15 | TC-4 | 60 | 1 | 0.1 | 916 | 8.6 | 107 | Pass¹ |
| 16 | TC-4 | 60 | 1 | 0.5 | 1116 | 8.5 | 131 | Pass¹ |
| 17 | TC-4 | 60 | 2 | 0.05 | 234 | 7.5 | 31 | Pass¹ |
| 18 | TC-4 | 60 | 2 | 0.1 | 424 | 14 | 30 | Pass¹ |
| 19 | TC-4 | 60 | 2 | 0.5 | 1402 | 44 | 32 | Pass¹ |
| Ref 5 | TC-5 | 40 | (none) | N/A | 5.39 | 0.38 | 14 | Reference |
| 20 | TC-5 | 40 | 1 | 0.5 | 6.70 | 0.42 | 16 | Pass¹ |

| | | | | | | | | |
|---|---|---|---|---|---|---|---|---|
| ¹ Sample Passes if Minimum Viscosity is below 200 Pa*s, the Thixotropic Index increases, and the Max Viscosity increases to a greater extent than Minimum Viscosity relative to the corresponding Reference composition. ² Sample Failed because Minimum Viscosity exceeds maximum amount of 200 Pa*s ³ Sample Failed because it became a non-flowable mixture and viscosity could not be measured. | | | | | | | | |

### Thermally Conductive Composition Samples - Part II (High Viscosity/High Degree of Polymerization 2^{nd} Polyorganosiloxane)

Prepare Base thermally Conductive Composition TC-6 (Ref 6) by mixing together 12.24 g Second Polyorganosiloxane 2, 1.9 g Second Polyorganosiloxane 3, 0.47 g Filler Treating Agent 1, 62.88 g Filler 1 and 22.51 g Filler 3 in a polypropylene cup at 2500 RPM for 20 seconds in a Flacktek speedmixer. Heat the mixture at 150 °C under vacuum at 3.066 MegaPascal (23 Torr) pressure for one hour to obtain Ref 6. TC-6 is 71 vol% filler.

Prepare Sample 21 by combining 20 g of Ref 6 with 0.02 g of First Polyorganosiloxane 1. Sample 21 contains 0.1 wt% First Polyorganosiloxane 1.

Determine the Maximum and Minimum Viscosity and Thixotropic Index for Ref 6 and Samples 21. Results are in Table 4.

**Table 4**

| **Sample** | **Vol% Filler** | **Wt% of 1^{st} Polyorganosiloxane** | **Maximum Viscosity** *(Pa*s)* | **Minimum Viscosity** *(Pa*s)* | **Thixotropic Index** | **Comments** |
|---|---|---|---|---|---|---|
| Ref 6 | 71 | 0 | 17492 | 119 | 147 | Reference |
| 21 | 71 | 0.1 | 117965 | 112 | 1053 | Pass¹ |

| | | | | | | |
|---|---|---|---|---|---|---|
| ¹ Sample Passes if Minimum Viscosity is below 200 Pa*s, the Thixotropic Index increases, and the Max Viscosity increases to a greater extent than Minimum Viscosity relative to the corresponding Reference composition. | | | | | | |

### Thermally Conductive Composition Samples - Part III (Samples without Aluminum Trihydrate)

Prepare Ref 7 in a 1-gallon Baker Perkins sigma-blade mixer. Add 827 g Second Polyorganosiloxane 4, 40 g Filler Treating Agent 1, 40 g Filler Treating Agent 2, and 1229 g Filler 5 and mix for 5 minutes. Scrape the chamber walls with a spatula and add 5242 g of Filler 4 and mix for 5 minutes. Scrape the chamber walls with a spatula and add 2621 g of Filler 2 and mix for 5 minutes. Scrape the chamber walls and then mix for an additional 5 minutes. Apply a vacuum to 25 Torr and mix for 30 minutes. Heat to 135 °C and mix for 60 minutes and then allow to cool to obtain Ref 7. The concentration of filer is 70 vol% of the composition.

Prepare Sample 22 by adding 100 g of Ref 7 to a Flacktek 100Max polypropylene cup and then adding 0.05 g of First Polyorganosiloxane 1. Mix at 2500 RPM for 20 seconds in a Flacktek speedmixer followed by 10 seconds at 1000 RPM.

Prepare Sample 23 by adding 100 g of Ref 7 to a Flacktek 100Max polypropylene cup and then adding 0.10 g of First Polyorganosiloxane 1. Mix at 2500 RPM for 20 seconds in a Flacktek speedmixer followed by 10 seconds at 1000 RPM.

Determine the Maximum and Minimum Viscosity and Thixotropic Index for Ref 7 and Samples 22 and 23. Results are in Table 5.

**Table 5**

| **Sample** | **Vol% Filler** | **Wt% of 1^{st} Polyorganosiloxane** | **Maximum Viscosity** *(Pa*s)* | **Minimum Viscosity** *(Pa*s)* | **Thixotropic Index** | **Comments** |
|---|---|---|---|---|---|---|
| Ref 7 | 70 | 0 | 2629 | 18 | 146 | Reference |
| 22 | 70 | 0.05 | 7152 | 20 | 358 | Pass¹ |
| 23 | 70 | 0.10 | 20111 | 28 | 718 | Pass¹ |

| | | | | | | |
|---|---|---|---|---|---|---|
| ¹ Sample Passes if Minimum Viscosity is below 200 Pa*s, the Thixotropic Index increases, and the Max Viscosity increases to a greater extent than Minimum Viscosity relative to the corresponding Reference composition. | | | | | | |

### Thermally Conductive Composition Samples - Part IV (Samples with Methyltrimethoxysilane Treating Agent)

Prepare Ref 8 by adding 0.88 g Second Polyorganosiloxane 1 and 0.84 g Filler Treating Agent 3 to a 100 mL polypropylene cup and place the cup in a Facktek Speed mixer and mix at 2000 RPM for 20 seconds. Add 41.64 g of Filler 6, mix a 2000 RPM for 30 seconds and then add 41.64 g Filler 7 and mix at 2500 RPM for 20 seconds. Hand mix and then mix again at 2500 RPM for 20 seconds. Transfer the resulting mixture to an aluminum pan and heat to 10 °C under vacuum at 3.066 MegaPascals (23 Torr) pressure for one hour to obtain Ref 8.

Prepare Sample 24 by mixing 30 g of Ref 8 with 0.03 g First Polyorganosiloxane 1 at 1000 RPM for 20 seconds followed by hand mixing and then mixing at 1000 RPM for 20 seconds and again followed by hand mixing. Allow to set at 25 °C for 2 days prior to characterizing.

Prepare Sample 25 in like manner as Sample 4 except use First Polyorganosiloxane 2 instead of First Polyorganosiloxane 1.

Determine the Maximum and Minimum Viscosity and Thixotropic Index for Ref 8 and Samples 24 and 25. Results are in Table 6.

**Table 6**

| **Sample** | **Vol% Filler** | **1^{st} Polyorganosiloxane** | | **Maximum Viscosity** *(Pa*s)* | **Minimum Viscosity** *(Pa*s)* | **Thixotropic Index** | **Comments** |
|---|---|---|---|---|---|---|---|
| | | ***Which One*** | ***Wt%*** | | | | |
| Ref 8 | 55 | (none) | 0 | 112 | 3.4 | 33 | Reference |
| 24 | 55 | 1 | 0.10 | 9160 | 12.7 | 721 | Pass¹ |
| 25 | 55 | 2 | 0.10 | 885 | 7.4 | 120 | Pass¹ |

| | | | | | | | |
|---|---|---|---|---|---|---|---|
| ¹ Sample Passes if Minimum Viscosity is below 200 Pa*s, the Thixotropic Index increases, and the Max Viscosity increases to a greater extent than Minimum Viscosity relative to the corresponding Reference composition. | | | | | | | |

### Curable Electrically Conductive Composition Samples - Part I

Table 7 presents the formulations for curable electrically conductive composition samples for Part I (Ref 9, 10 and Samples 26-33 and C and D). Prepare the samples in the following manner.

First prepare a catalyst/inhibitor solution by adding 7.89 g of Platinum Catalyst 1 and 12.25 g of Second Polyorganosiloxane 2 in a polypropylene cup and mix at 2000 RPM for 30 seconds using a FlackTeck Speed mixer. Add 12.11 g Inhibitor 1 and mix at 2000 RPM for 30 seconds.

Then, prepare a masterbatch by adding 92.91 g Second Polyorganosiloxane 3 to a polypropylene cup and then add the 5.071 g catalyst/inhibitor solution. Mix at 2000 RPM for 30 seconds. Add 2.03 g Si-H Polysiloxane and mix at 2000 RPM for 30 seconds. This is "Masterbatch 1".

Weight out the specified amount of Filler 8 from Table 7 into a polypropylene cup (20.00 g total batch size), add the specified amount of Masterbatch 1 and mix at 2000 RPM for 30 seconds. Add the specified amount of First Polyorganosiloxane 1 or First Polyorganosiloxane 2 and mix at 2000 RPM for 30 seconds to obtain the final curable electrically conductive composition sample.

**Table 7**

| **Sample** | **Filler 8 (g)** | **Masterbatch** 1 **(g)** | **First Polyorganosiloxane** | | **wt% Filler** | **Vol% Filler** |
|---|---|---|---|---|---|---|
| | | | *Which One* | *(g)* | | |
| Ref 9 | 16.00 | 4.00 | (none) | 0 | 80 | 28 |
| 26 | 16.01 | 3.98 | 1 | 0.02 | 80 | 28 |
| 27 | 16.01 | 3.90 | 1 | 0.10 | 80 | 28 |
| 28 | 16.01 | 3.80 | 1 | 0.2 | 80 | 28 |
| 29 | 16.01 | 3.71 | 1 | 0.30 | 80 | 28 |
| Ref 10 | 14.01 | 6.01 | (none) | 0 | 70 | 18 |
| 30 | 14.01 | 5.98 | 1 | 0.02 | 70 | 18 |
| 31 | 14.01 | 5.90 | 1 | 0.10 | 70 | 18 |
| 32 | 14.01 | 5.80 | 1 | 0.20 | 70 | 18 |
| 33 | 14.01 | 5.70 | 1 | 0.30 | 70 | 18 |
| C | 16.01 | 3.70 | 2 | 0.32 | 80 | 28 |
| D | 14.01 | 5.70 | 2 | 0.30 | 70 | 18 |

### Curable Electrically Conductive Composition Samples - Part II (Curable Compositions)

Prepare the curable electrically conductive composition samples for Part II (Ref 11 and 12 and Samples 34 and 35) in the following manner.

First prepare a catalyst/inhibitor solution by adding 7.89 g of Platinum Catalyst 1 and 12.25 g of Second Polyorganosiloxane 2 in a polypropylene cup and mix at 2000 RPM for 30 seconds using a FlackTeck Speed mixer. Add 12.11 g Inhibitor 1 and mix at 2000 RPM for 30 seconds.

***Ref 11:*** Add 24.00 g of Filler 8 and 5.28 g of Second Polyorganosiloxane 4 into a polypropylene cup and mix at 2000 RPM for 30 seconds. Add 0.31 g catalyst/inhibitor solution and mix at 2000 RPM for 30 seconds. Add 0.42 g of Si-H Polysiloxane and mix at 2000 RPM for 30 seconds.

***Ref 12*:** Prepare in like manner as Ref 11 except use 24.01 g Filler 8, 0.16 g of Si-H Polysiloxane, 0.32 g catalyst/inhibitor solution, and 5.53 g of Second Polyorganosiloxane 5 (instead of Second Polyorganosiloxane 4).

***Sample 34:*** Prepare in like manner as Ref 11 except use 5.00 g of Second Polyorganosiloxane 4 and 0.40 g of Si-H Polysiloxane. Also, mix in 0.30 g of First Polyorganosiloxane 1 at 2000 RPM for 30 seconds after all the other ingredients have been added.

***Sample 35*:** Prepare in like manner as Ref 12 except use 5.25 g of Second Polyorganosiloxane 5 and 0.31 g of Catalyst/Inhibitor Solution. Also, mix in 0.30 g of First Polyorganosiloxane 1 at 2000 RPM for 30 seconds after all the other ingredients have been added.

Table 8 presents the characterization results for the Electrically Conductive Composition Samples.

**Table 8**

| **Sample** | **First Polyorganosiloxane** | | **Vol% Filler** | **Maximum Viscosity (Pa*s)** | **Minimum Viscosity (Pa*s)** | **Thixotropic Index** | **Comments** |
|---|---|---|---|---|---|---|---|
| | ***Which one*** | ***wt%*** | | | | | |
| Ref 9 | (none) | 0 | 28 | 4012 | 89 | 45 | Reference |
| 26 | 1 | 0.1 | 28 | 8459 | 96 | 88 | Pass¹ |
| 27 | 1 | 0.5 | 28 | 14339 | 94 | 152 | Pass¹ |
| 28 | 1 | 1.0 | 28 | 14278 | 99 | 143 | Pass¹ |
| 29 | 1 | 1.5 | 28 | 16475 | 96 | 171 | Pass¹ |
| Ref 10 | (none) | 0 | 18 | 434 | 55 | 8 | Reference |
| 30 | 1 | 0.1 | 18 | 593 | 62 | 10 | Pass¹ |
| 31 | 1 | 0.5 | 18 | 683 | 59 | 11 | Pass¹ |
| 32 | 1 | 1.0 | 18 | 832 | 58 | 14 | Pass¹ |
| 33 | 1 | 1.5 | 18 | 959 | 56 | 17 | Pass¹ |
| Ref 11 | (none) | 0 | 28 | 6916 | 3.8 | 1821 | Reference |
| 34 | 1 | 1.0 | 28 | 20615 | 5.5 | 3722 | Pass¹ |
| Ref 12 | (none) | 0 | 28 | 8954 | 14 | 622 | Reference |
| 35 | 1 | 1.0 | 28 | 25338 | 19 | 1365 | Pass¹ |
| C | 2 | 1.6 | 28 | 2456 | 190 | 13 | Fail² |
| D | 2 | 1.5 | 18 | 304 | 96 | 3 | Fail² |

| | | | | | | | |
|---|---|---|---|---|---|---|---|
| ¹ Sample Passes if Minimum Viscosity is below 200 Pa*s, the Thixotropic Index increases, and the Max Viscosity increases to a greater extent than Minimum Viscosity relative to the corresponding Reference composition. ² Sample Failed because it did not result in increased thixotropic index. | | | | | | | |

## Claims

1. A composition comprising filler particles dispersed in a matrix material, wherein the matrix material comprises:
(a) 0.01 to 1.50 weight-percent of a first polyorganosiloxane, wherein first polyorganosiloxane is a linear polyorganosiloxane with an average of 2 or more carboxylic acid groups per molecule; and
(b) 5 to 30 weight-percent of a second polyorganosiloxane that is free of carboxylic acid groups, wherein the second polyorganosiloxane is a liquid at 25 degrees Celsius and 101 megaPascals pressure;
wherein the filler particles are present at a concentration in a range of 15 to less than 78 volume-percent based on composition volume and weight-percent values are relative to weight of the composition and wherein the composition is free of at least one of aliphatic diols and silicone polyethers.

2. The composition of Claim 1, wherein the first polyorganosiloxane has an average chemical structure (I):
HOOC-R'-R₂SiO-[R₂SiO]ₙ-SiR₂-R'-COOH (I)
where R' is independently in each occurrence selected from a group of divalent hydrocarbons having from one to 12 carbon atoms, R is independently in each occurrence selected from a group of hydrocarbyls having from one to eight carbon atoms, and subscript n is a value in a range of 5-150.

3. The composition of Claim 2, where each R' is -[CH₂]₉-, each R is methyl and subscript n is a value in a range of 8 to 130.

4. The composition of any one previous Claim, wherein the second polyorganosiloxane has an average chemical structure (II):
R^{a}R"₂SiO-[R₂SiO]ₘ-OR"₂R^{a} (II)
where each R" and R^{a} is independently in each occurrence selected from a group of hydrocarbyls having from one to eight carbon atoms and subscript m is a value in a range of 40 to 800.

5. The composition of Claim 4, wherein the matrix material further comprises a third polysiloxane comprising two or more silyl hydride groups.

6. The composition of any one previous Claim, wherein the filler particles comprise thermally conductive filler particles at a concentration in a range of 40 to 74 volume-percent based on composition volume and wherein:
i. when the thermally conductive filler is present at a concentration in a range of 40 to 70 volume-percent based on composition volume then the first polyorganosiloxane is present at a concentration in a range of 0.01 weight-percent to less than 1.5 weight-percent relative to composition weight; and
ii. when the thermally conductive filler is present at a concentration of greater than 70 and at the same time 74 volume-percent based on composition volume, then the first polyorganosiloxane is present at a concentration in a range of 0.01 weight-percent to 0.5 weight-percent relative to composition weight.

7. The composition of Claim 6, wherein the composition further comprises a filler treating agent that is selected from trialkoxy functional silicones and silanes.

8. The composition of any one of Claims 1-5, wherein the filler particles comprise electrically conductive filler particles that are present at a concentration in a range of 5 to 55 volume-percent based on composition volume and wherein the first polyorganosiloxane is present at a concentration in a range of 0.1 to 1.5 weight-percent relative to composition weight.

9. The composition of Claim 8, wherein the second polyorganosiloxane comprises at least two vinyl groups per molecule and wherein the composition further comprises a silyl hydride functional polydimethylsiloxane crosslinker and a platinum-based hydrosilylation catalyst.

10. The composition of any one previous Claim, wherein the composition is free of any one or any combination of more than one of: aliphatic diols, silicone polyethers, and Si-OH terminal polysiloxanes.

## Patentansprüche

1. Zusammensetzung, umfassend Füllstoffpartikel, die in einem Matrixmaterial dispergiert sind, wobei das Matrixmaterial umfasst:
(a) 0,01 bis 1,50 Gewichtsprozent eines ersten Polyorganosiloxans, wobei das erste Polyorganosiloxan ein lineares Polyorganosiloxan mit einem Durchschnitt von 2 oder mehr Carbonsäuregruppen pro Molekül ist; und
(b) 5 bis 30 Gewichtsprozent eines zweiten Polyorganosiloxans, das frei von Carbonsäuregruppen ist, wobei das zweite Polyorganosiloxan bei 25 Grad Celsius und 101 Megapascal Druck eine Flüssigkeit ist;
wobei die Füllstoffpartikel in einer Konzentration in einem Bereich von 15 bis weniger als 78 Volumenprozent, bezogen auf das Zusammensetzungsvolumen, vorhanden sind und die Gewichtsprozentwerte sich auf das Gewicht der Zusammensetzung beziehen und wobei die Zusammensetzung frei von mindestens einem von aliphatischen Diolen und Silikonpolyethern ist.

2. Zusammensetzung nach Anspruch 1, wobei das erste Polyorganosiloxan eine durchschnittliche chemische Struktur (I) aufweist:
HOOC-R'-R₂SiO-[R₂SiO]ₙ-SiR₂-R'-COOH (I)
wobei R' bei jedem Vorkommen unabhängig aus einer Gruppe von zweiwertigen Kohlenwasserstoffen, die von ein bis 12 Kohlenstoffatome aufweisen, ausgewählt wird, R bei jedem Vorkommen unabhängig aus einer Gruppe von Hydrocarbylgruppen, die von ein bis acht Kohlenstoffatome aufweisen, ausgewählt wird und Index n ein Wert in einem Bereich von 5 bis 150 ist.

3. Zusammensetzung nach Anspruch 2, wobei jedes R' -[CH₂]₉- ist, jedes R Methyl ist und der Index n ein Wert im Bereich von 8 bis 130 ist.

4. Zusammensetzung nach einem der vorstehenden Ansprüche, wobei das zweite Polyorganopolysiloxan eine durchschnittliche chemische Struktur (II) aufweist:
R^{a}R"₂SiO-[R₂SiO]ₘ-OR"₂R^{a} (II)
wobei jedes R" und R^{a} bei jedem Vorkommen unabhängig aus einer Gruppe von Hydrocarbylen mit ein bis acht Kohlenstoffatomen ausgewählt sind und Index m einen Wert im Bereich von 40 bis 800 aufweist.

5. Zusammensetzung nach Anspruch 4, wobei das Matrixmaterial ferner ein drittes Polysiloxan umfasst, umfassend zwei oder mehr Silylhydridgruppen.

6. Zusammensetzung nach einem der vorstehenden Ansprüche, wobei die Füllstoffpartikel wärmeleitfähige Füllstoffpartikel in einer Konzentration in einem Bereich von 40 bis 74 Volumenprozent, basierend auf dem Zusammensetzungsvolumen, umfassen, und wobei:
i. wenn der wärmeleitfähige Füllstoff in einer Konzentration in einem Bereich von 40 bis 70 Volumenprozent, bezogen auf das Volumen der Zusammensetzung, vorhanden ist, dann ist das erste Polyorganosiloxan in einer Konzentration im Bereich von 0,01 Gewichtsprozent bis weniger als 1,5 Gewichtsprozent, bezogen auf das Gewicht der Zusammensetzung, vorhanden; und
ii. wenn der wärmeleitfähige Füllstoff in einer Konzentration von mehr als 70 und gleichzeitig 74 oder weniger Volumenprozent, basierend auf dem Zusammensetzungsvolumen, vorhanden ist, dann ist das erste Polyorganosiloxan in einer Konzentration in einem Bereich von 0,01 Gewichtsprozent bis 0,5 Gewichtsprozent, bezogen auf das Gewicht der Zusammensetzung, vorhanden.

7. Zusammensetzung nach Anspruch 6, wobei die Zusammensetzung ferner ein Füllstoffbehandlungsmittel umfasst, das aus trialkoxyfunktionellen Silikonen und Silanen ausgewählt ist.

8. Zusammensetzung nach einem der Ansprüche 1 bis 5, wobei die Füllstoffpartikel elektrisch leitfähige Füllstoffpartikel umfassen, die in einer Konzentration in einem Bereich von 5 bis 55 Volumenprozent, bezogen auf das Zusammensetzungsvolumen, vorhanden sind, und wobei das erste Polyorganosiloxan in einer Konzentration in einem Bereich von 0,1 bis 1,5 Gewichtsprozent, bezogen auf das Gewicht der Zusammensetzung, vorhanden ist.

9. Zusammensetzung nach Anspruch 8, wobei das zweite Polyorganosiloxan mindestens zwei Vinylgruppen pro Molekül umfasst und wobei die Zusammensetzung ferner einen Polydimethylsiloxan-Vernetzer mit Silylhydrid-Funktionalität und einen Hydrosilylierungskatalysator auf Platinbasis umfasst.

10. Zusammensetzung nach einem der vorstehenden Ansprüche, wobei die Zusammensetzung frei von einem oder einer beliebigen Kombination von mehr als einem der folgenden Stoffe ist: aliphatische Diole, Silikonpolyether und Si-OHterminale Polysiloxane.

## Revendications

1. Composition comprenant des particules de charge dispersées dans un matériau de matrice, dans laquelle le matériau de matrice comprend :
(a) de 0,01 à 1,50 % en poids d'un premier polyorganosiloxane, un premier polyorganosiloxane étant un polyorganosiloxane linéaire avec une moyenne de 2 groupes d'acide carboxylique ou plus par molécule ; et
(b) de 5 à 30 % en poids d'un second polyorganosiloxane exempt de groupes d'acide carboxylique, le second polyorganosiloxane étant liquide à 25 degrés Celsius et à une pression de 101 mégaPascals ;
dans laquelle les particules de charge sont présentes à une concentration dans une plage comprise entre 15 et moins de 78 % en volume par rapport au volume de la composition et les valeurs en pourcentage en poids sont relatives au poids de la composition, et dans laquelle la composition est exempte d'au moins un parmi des diols aliphatiques et des polyéthers de silicone.

2. Composition selon la revendication 1, dans laquelle le premier polyorganosiloxane présente la structure chimique moyenne (I) :
HOOC-R'-R₂SiO-[R₂SiO]ₙ-SiR₂-R'-COOH (I)
où R' est indépendamment, dans chaque occurrence, choisi dans un groupe d'hydrocarbyles divalents ayant de un à douze atomes de carbone, R est indépendamment, dans chaque occurrence, choisi dans un groupe d'hydrocarbyles ayant de un à huit atomes de carbone, et l'indice n est une valeur dans une plage comprise entre 5 et 150.

3. Composition selon la revendication 2, dans laquelle chaque R' est - [CH₂]₉-, chaque R est méthyle et l'indice n est une valeur dans une plage comprise entre 8 et 130.

4. Composition selon l'une quelconque revendication précédente, dans laquelle le second organopolysiloxane présente la structure suivante (II) :
R^{a}R"₂SiO-[R₂SiO]ₘ-OR"₂R^{a} (II)
où R" et R^{a} sont indépendamment choisis dans un groupe d'hydrocarbyles ayant de un à huit atomes de carbone et l'indice m est une valeur dans la plage comprise entre 40 et 800.

5. Composition selon la revendication 4, dans laquelle le matériau de matrice comprend en outre un troisième polysiloxane comprenant deux groupes hydrure de silyle ou plus.

6. Composition selon l'une quelconque revendication précédente, dans laquelle les particules de charge comprennent des particules de charge thermoconductrice à une concentration comprise dans une plage comprise entre 40 à 74 % en volume sur la base du volume de la composition et dans laquelle :
i lorsque la charge thermoconductrice est présente à une concentration dans une plage comprise entre 40 et 70 % en volume par rapport au volume de la composition, alors le premier polyorganosiloxane est présent à une concentration dans une plage comprise entre 0,01 % en poids et moins de 1,5 % en poids par rapport au poids de la composition ; et
ii. lorsque la charge thermoconductrice est présente à une concentration supérieure à 70 et en même temps inférieure ou égale à 74 % en volume sur la base du volume de la composition, alors le premier polyorganosiloxane est présent à une concentration dans une plage comprise entre 0,01 à 0,5 % en poids par rapport au poids de la composition.

7. Composition selon la revendication 6, dans laquelle la composition comprend en outre un agent de traitement de charge choisi parmi les silicones et les silanes fonctionnels trialkoxy.

8. Composition selon l'une quelconque des revendications 1 à 5, dans laquelle les particules de charge comprennent des particules de charge électroconductrices qui sont présentes à une concentration dans une plage comprise entre 5 et 55 % en volume par rapport au volume de la composition et dans laquelle le premier polyorganosiloxane est présent à une concentration comprise entre 0,1 et 1,5 % en poids par rapport au poids de la composition.

9. Composition selon la revendication 8, dans laquelle le second polyorganosiloxane comprend au moins deux groupes vinyle par molécule et dans laquelle la composition comprend en outre un réticulant polydiméthylsiloxane fonctionnel à l'hydrure de silyle et un catalyseur d'hydrosilylation à base de platine.

10. Composition selon l'une quelconque des revendications précédentes, dans laquelle la composition est exempte d'un ou d'une combinaison quelconque de plus d'un parmi : des diols aliphatiques, des polyéthers de silicone et des polysiloxanes à terminaison Si-OH.
